# EUROPÄISCHE PATENTANMELDUNG

(11) **EP 2 363 626 A1**
(43) Veröffentlichungstag der Anmeldung: **07.09.2011**
(21) Anmeldenummer: 11001768.8
(22) Anmeldetag: 03.03.2011
(51) Int. Cl.: F16L 25/08, F16L 37/14

(54) **Kupplungsteil für ein fluidisches Schnellverbindungssystem**

(30) Priorität: 04.03.2010 DE 202010003186 U
(71) Anmelder: Dürr Dental AG, 74321 Bietigheim-Bissingen (DE)
(72) Erfinder: Nonnenmacher, Eberhardt, 74379 Ingersheim (DE)
(74) Vertreter: Ostertag, Reinhard

(57) **Zusammenfassung**

Zum Anschließen eines glatten Rohrendabschnittes (10, 12) an ein Schnellkupplungssystem wird vorgeschlagen, ein Kupplungsteil (14) , welches mit einem Kupplungskopf (18) versehen ist, mit einem verbindungsabschitt (16) auszustatten, der fest mit der Außenseite des Rohrendabschnittes (10) verbindbar ist, z.B. unter Verwendung einer Fixierschraube (46).

## Beschreibung

Die Erfindung betrifft ein Kupplungsteil eines fluidischen Schnellverbindungssystems gemäß dem Oberbegriff des Anspruches 1.

Ein derartiges Schnellverbindungssystem ist im deutschen Gebrauchsmuster 297 18 150 beschrieben.

Mit dem dort beschriebenen Schnellverbindungssystem lassen sich Rohrverbindungen mit komplizierter Geometrie aus geraden Rohrstücken und Winkelelementen aufbauen. Dabei ist auch vorgesehen, das Ende von glatten Rohrabschnitten mit speziellen Kupplungsteilen zu verbinden, die dann ein weiterführen des Rohres unter Verwendung von Elementen des Schnellverbindungssystems ermöglichen. Dies erfolgt dadurch, dass ein rohrförmiger Verbindungsabschnitt eines Kupplungsteiles ins Innere des anzuschliessenden glatten Rohrteiles eingeführt wird.

Auf diese Weise kann man eine Strömungsverbindung herstellen, die dicht ist, die aber keinen großen Kräften standhält.

Durch die vorliegende Erfindung soll ein Kupplungsteil gemäß dem oberbegriff des Anspruches 1 so weitergebildet werden, dass es auch mechanisch stark belastbar mit einem Rohrstück verbindbar ist.

Diese Aufgabe ist erfindungsgemäß gelöst durch ein kupplungsteil mit den im Anspruch 1 angegebenen Merkmalen.

Da das erfindungsgemäße Kupplungsteil mit der Außenfläche des anzuschließenden Rohrstückes zusammenarbeitet, hat man hier einen guten Zugang, der es gestattet, die Verbindungsstelle so auszugestalten, dass sie hohen mechanischen Kräften standhalten kann.

Gemäß Anspruch 2 kann man an der Verbindungsstelle z.B. einen Fixierkragen vorsehen, der geschlitzt ist und bei freigegebener Spannschraube über das Rohrstück schiebbar ist, worauf dann die spannschraube angezogen wird, um die Federarme des Fixierkragens fest gegen die Außenfläche des Rohres zu drücken. Man kann auch an der Verbindungsstelle eine Fixierschraube vorsehen, die direkt in einem transversalen Gewinde des Kupplungsteiles läuft und mit der Außenfläche des Rohrstückes klemmend zusammenarbeitet, oder sich in die Außenfläche des Rohrstückes hinein arbeitet. Man kann an der Verbindungsstelle auch eine Klebeschicht vorsehen.

Alle diese Verbindungsmöglichkeiten sind nicht realisierbar, wenn der Verbindungsabschnitt des Kupplungsteiles mit der Innenfläche des anzuschließenden Rohrstückes zusammenarbeitet.

Die Weiterbildung der Erfindung gemäß Anspruch 3 gestattet es, zwei normale Rohrstücke miteinander zu verbinden. Dabei erhält man bei einem geraden Brückenstück eine fluchtende gerade Verbindung, bei einem abgewinkelten Brückenstück eine Eckverbindung.

Die Weiterbildung der Erfindung gemäß Anspruch 4 ist im Hinblick auf eine exakt vorgegebene Beabstandung der Enden zu verbindender Rohrstücke von Vorteil.

Die Weiterbildung der Erfindung gemäß Anspruch 5 ist im Hinblick auf eine gute Abdichtung der Verbindungsstelle von Vorteil.

Mit der Weiterbildung der Erfindung gemäß Anspruch 3 wird ein axiales Verblocken der beiden Kupplungsteile bei geschlossener Steckverbindung erhalten. Die Schnellverbindung bleibt somit auch bei Ausüben von axialen Zugkräften zuverlässig dicht.

Bei einem Kupplungsteil gemäß Anspruch 4 erfolgt das Verriegeln in zur Achse des Kupplungsteils symmetrischer Weise. Damit werden Kippmomente von der Schnellvebindung durch die Verriegelungseinrichtung ferngehalten.

Die Weiterbildung der Erfindung gemäß Anspruch 8 ist im Hinblick auf ein einfaches Sichern des Verriegelungteiles auf dem Kupplungsteil von Vorteil.

Die Weiterbildung der Erfindung gemäß Anspruch 9 ist im Hinblick auf ein im Bedarfsfalle einfaches Entfernen des Verriegelungsteiles von Vorteil.

Mit der Weiterbildung der Erfindung gemäß Anspruch 10 wird eine besonders präzise Positionierung des Verriegelungsteiles erhalten.

Die Weiterbildung der Erfindung gemäß Anspruch 11 ist im Hinblick auf ein leichtes Aufrasten und Abnehmen des Verriegelungsteiles von Vorteil, sorgt zusätzlich aber auch für besonders guten Kraftschluss zwischen den Verriegelungsarmen des Verriegelungsteiles und der Verriegelungsnut.

Auf der Basis des erfindungsgemäßen Kupplungsteiles lassen sich auch starre Rohrleitungselemente herstellen, die leicht durch Zusammenstecken zu Leitungen gewünschter Geometrie zusammengefügt werden.

Nachstehend wird die Erfindung anhand von Ausführungsbeispielen unter Bezugnahme auf die Zeichnung näher erläutert. In dieser zeigen:
- Figur 1:: einen axialen Schnitt durch ein zwischen zwei geraden Rohrenden wirkendes Schnellverbindungssystem;
- Figur 2:: einen transversalen Schnitt durch die Verbindungsstelle längs der Schnittlinie B-B von Figur 1;
- Figur 3:: eine Aufsicht auf die in Figur 1 gezeigte Verbindungsstelle in kleinerem Maßstab;
- Figur 4:: die Verwendung von Teilen eines Schnellverbindungssystemes zum Anschließen eines Schlauches an ein glattes Rohr;
- Figur 5:: einen transversalen Schnitt durch die Verbindungsstelle nach Figur 4 längs der dortigen Schnittlinie B-B; und
- Figur 6:: eine Aufsicht auf die Verbindungsstelle nach Figur 4 in verkleinertem Maßstabe.

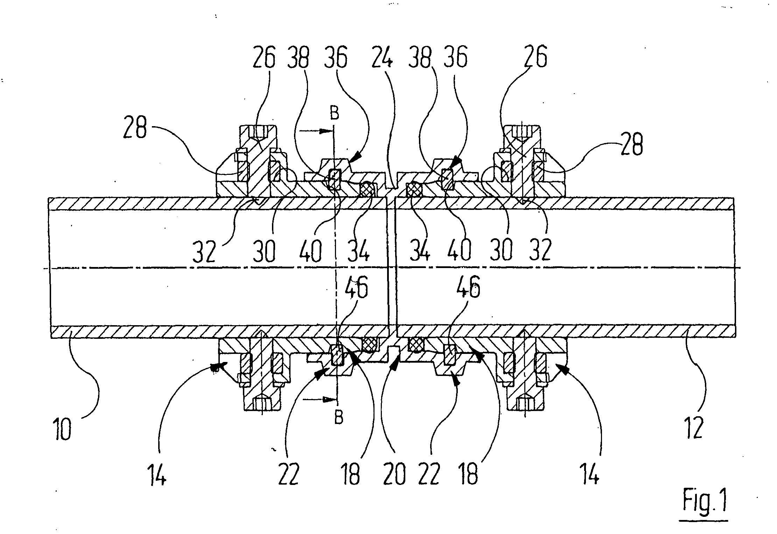

In Figur 1 sind mit 10 und 12 zwei Endabschnitte von geraden Rundrohren bezeichnet. Auf diesen Endabschnitten sitzt jeweils ein Kupplungsteil 14, welches einen mit der Außenfläche eines Endabschnittes 10, 12 zusammenarbeitenden rohrförmigen verbindungsabschnitt 16 und ein nachstehend noch genauer zu beschreibenden Kupplungskopf 18 aufweist.

Die beiden Kupplungsteile 14 sind durch ein Brückenteil 20 verbunden, welches zwei zu den Kupplungsköpfen 18 komplementäre Gegenkupplungsköpfe 22 aufweist.

Das Brückenteil 20 hat einen eingezogenen zentralen Abschnitt 24, der in einer radialen Schnittebene die Form eines rechteckigen U aufweist- Die Innenfläche des Abschnittes 24 passt unter engem Spiel über die Außenflächen der Endabschnitte 10, 12.

In den verbindungsabschnitten 16 der Kupplungsteile 14 sind jeweils zwei einander diametral gegenüberliegende Fixierschrauben 26 vorgesehen, die in einer Mutter 28 laufen, welche in eine Ausnehmung 30 des Kupplungsteils 14 eingesetzt ist. Die Fixierschrauben 26 haben jeweils eine kegelförmige spitze 32, welche sich in das Material eines Endabschnittes 10, 12 hineinarbeiten kann.

Der Innendurchmesser des Kupplungsteiles 14 ist so gewählt, dass das Kupplungsteil unter engem Spiel auf die Außenfläche eines Endabschnittes 10, 12 aufgeschoben werden kann. Nach Anziehen der Fixierschraube 26 hat dann der Rohrendabschnitt die Fähigkeit erhalten, mit dem Brückenteil 20 oder einem anderen Element des Schnellverbindungssystem zusammenzuarbeiten.

Die Lage des Kupplungsteiles 14 auf dem Rohrendabschnitt 10 bzw. 12 wird so gewählt, dass die freie Stirnfläche des Kupplungsteiles 14 eine vorgegebene Strecke von der Stirnfläche des entsprechenden Rohrendabschnittes 10, 12 entfernt ist. Genauer ist diese Strecke so gewählt, dass eine o-Ringdichtung 34, die zwischen den einander gegenüberliegenden Stirnflächen des Abschnittes 24 des Brückenteiles 20 und der freien Stirnfläche des Kupplungsteiles 14 liegt, in axialer und radialer Richtung eine vorgegebene Vorspannung erhält.

Um diese Vorspannung aufrecht erhalten zu können, wirkt zwischen dem Brückenteil 20 und den Kupplungsteilen 14 jeweils eine insgesamt mit 36 bezeichnete Verriegelungseinheit.

In den in Figur 1 außenliegenden Abschnitten des Brückenteils 20 ist jeweils eine Verriegelungsnut 38 vorgesehen, und in der Außenfläche des Kupplungskopfes 18 der Kupplungsteile 14 ist jeweils eine Positioniernut 40 eingeformt.

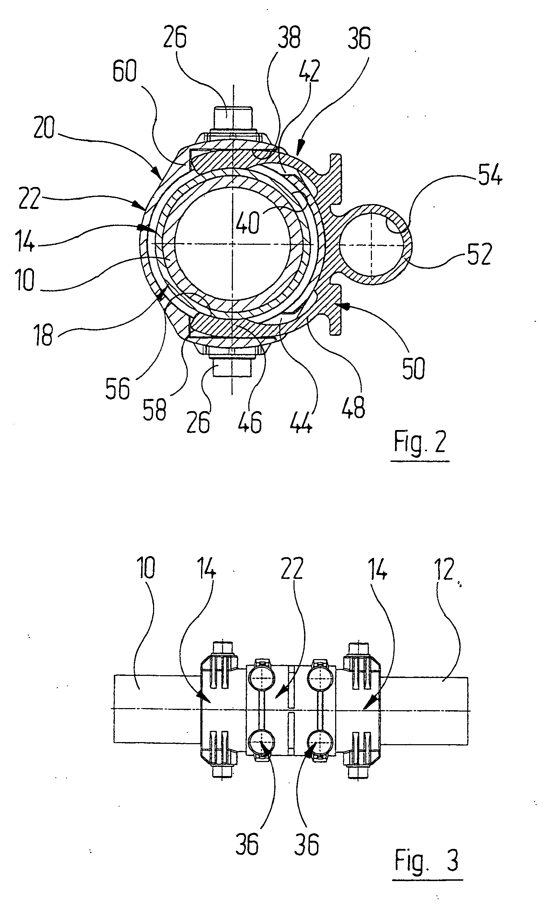

Diese steht über zwei einander gegenüberliegende Fenster 42, wie insbesondere aus Figur 2 ersichtlich ist, mit dem Innenraum des Kupplungsteils in Verbindung.

Im Bereich der Fenster 42 sind an die Außenseite des Kupplungsteiles 14 zwei Führungslaschen 44 angeformt.

In die Fenster 42 sind in Figur 2 von rechts zwei einander diametral gegenüberliegende Verriegelungsarme 46 eingeführt, die über dazwischen liegende Biegeabschnitte 48 zu einem insgesamt mit 50 bezeichneten Verriegelungsteil zusammengefügt sind.

Bei seiner Mitte hat das Verriegelungsteil 50 einen Greifabschnitt 52, der mit einer Durchbrechung 54 versehen ist. An dieser kann ein Werkzeug zum Ziehen des Verriegelungsteiles 50 angesetzt werden.

Wie aus Figur 2 gut ersichtlich, nehmen die Innenflächen seitlicher Schenkel der Führungslaschen 44 die Stirnfläche der Verriegelungsarme 46 zwischen einander auf. Damit sind die Verriegelurigsarme 46 sowohl in ihrem radial innen liegenden Abschnitt axial festgelegt (durch die wände der Verriegelungsnut 35) als auch in ihrem radial außen liegenden Abschnitt axial festgelegt (durch die Schenkel der Führungslaschen 44) und verkanten somit auch bei Ausüben großer Zugkräfte auf die Schnellverbindung nicht, obwohl die Verriegelungsarme elastisch radial bewegbar sind und die sie tragenden Biegeabschnitte 48 kleineren Querschnitt aufweisen müssen und daher etwas tordierbar sind.

Damit sind die Kupplungsteile 14 und das Brückenteil 20 einfach und rasch verbindbar und trennbar und gleichzeitig hält die Schnellverbindung auch großen axialen Belastungen stand.

Wie aus Figur 2 ersichtlich, können die Fenster 42 zusammen mit den Führungslaschen 44 beim Spritzen dadurch hergestellt werden, dass man von der Seite her einen entsprechenden zweiarmigen Schieber in die Spritzform einführt.

Wie ebenfalls aus Figur 2 ersichtlich, haben die Verriegelungsarme 46 eine radial innen liegende Begrenzungsfläche 56, deren Krümmungsduchmesser dem Aussendurchmesser des Verbindungsabschnittes 16 entspricht. Eine aussen liegende Begrenzungsfläche 58 der Verriegelungsarme 46 verläuft im wesentlichen gemäß dem Aussendurchmesser des Verbindungsabschnittes 16 und unter Abstand von der Innenfläche der Führungslaschen 44, so dass die Verriegelungsarme 46 unter elastischer Verformung der Biegeabschnitte 48 radial nach aussen federn können, wenn das Verriegelungsteil 50 in Figur 2 nach rechts aus dem Brückenteil 20 und dem Kupplungsteil herausgezogen wird.

In ihrem in Figur 2 links liegenden Abschnitt hat die Verriegelungsnut 38 jeweils eine Anachlagachulter 60, die mit der Endläche eines zugeordneten Verrieglungsarmes 46 zusammen einen in Einführrichtung wirkenden Anschlag bildet.

Das Kupplungsteil 14 und das Brückenteil 20 sind einstückige Plastikspritzteile, die z.B- fasergefüllte Duroplasten sein können. Auch das Verriegelungsteil 50 ist ein Kunststoffspritzteil. Für das Verriegelungsteil wird vorzugsweise aber ein Thermoplast mit gutem Federvermögen verwendet.

In der Zeichnung ist die Rohrverbindung in geschlossenem Zustand gezeigt. Um die Verbindung zu öffnen wird das Verriegelungsteil 50 in Figur 2 nach rechts aus den Fenstern 42 herausgezogen. Damit ist die axiale Verrielung zwischen dem Kupplungsteil 14 und dem Brückenteil 20 aufgehoben und unter Überwindung der von der komprimierten o-Ringdichtung 34 auf der Innenfläche des Verbindungsabschnittes 16 erzeugten Reibungskraft kann man das Kupplungsteil 14 und das Brückenteil 20 in axialer Richtung auseinanderziehen.

Das Schließen der oben beschriebenen Kupplung erfolgt in umgekehrter Richtung wie das öffnen: Zunächst wird das Brückenteil 20 über das Kupplungsteil 14 geschoben, bis die Stirnfläche des Kupplungsteiles 14 über die o-Ringdichtung 34 am Abschnitt 24 des Brückenteile 20 anschlägt. In dieser Stellung fluchtet dann die Verriegelungsnut 38 mit der Positionienut 40 und den im Verbindungsabschnitt 16 vorgesehenen Fenstern 42. Das Verriegelungsteil 50 kann nun unter elastischer Aufweitung in die Fenster 42 und die Verriegelungsnut 38 geschoben werden, wobei es mit den gebogenen Begrenzungsflächen der Verriegelungsarme 46 auf dem Boden der Verriegelungsnut 38 aufrastet. Da die Dicke des Verriegelungsteiles 50 der Breite der Verriegelungsnut 38 entspricht, sind nun das Brückenteil 20 und das Kupplungsteil 14 spielfrei in axialer Richtung verriegelt.

Das Verbinden des Brückenteiles 20 mit dem in Figur 1 rechts gelegenen Kupplungsteil 14 erfolgt ähnlich, worauf dann eine strömungsmitteldichte Verbindung zwischen den Rohrendabschnitten 10, 12 hergestellt ist.

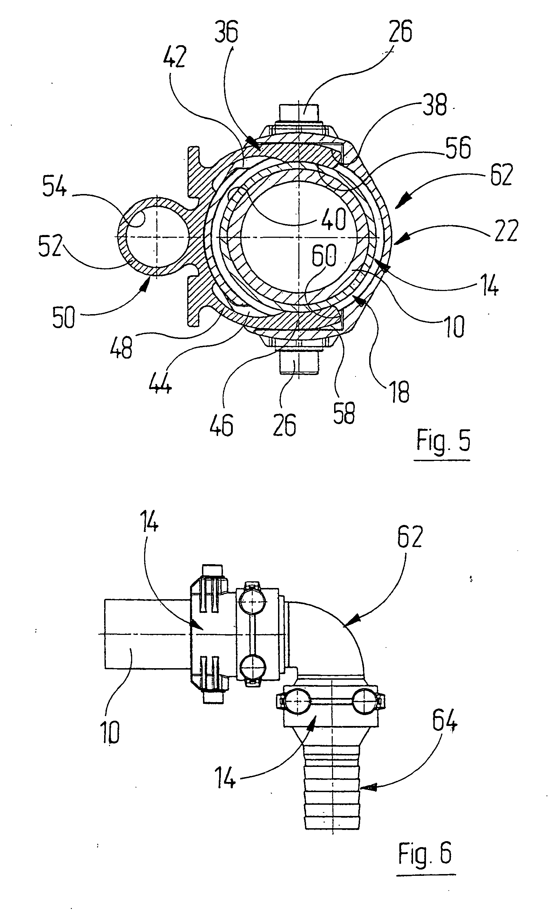

Die Figuren 3 bis 5 zeigen eine abgewandelte Ausführungsform der Erfindung.

Auf einen Rohrendabschnitt 10 ist wieder ein Kupplungsteil 10 unter Verwendung von Fixierschrauben 26 fest aufgesetzt, wobei die Stirnfläche des Kupplungskopfes 18 wieder den weiter oben angesprochenen Abstand von der ringförmigen Endfläche des Rohrendabschnittes 10 einhält.

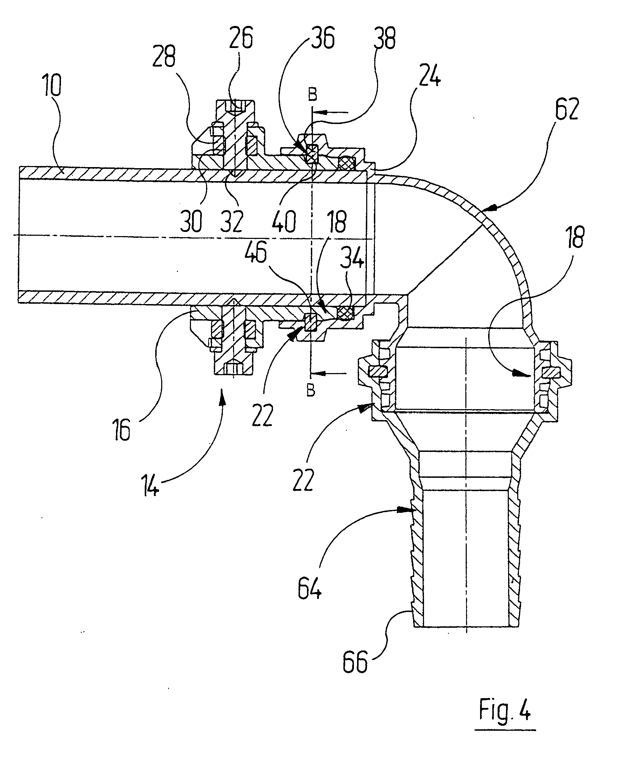

Der Kupplungskopf 18 des Kuppluslgsteiles 14 ist nun aber mit einem Gegenkupplungskopf 22 verbunden, der Teil eines Rohrkrümmers 62 ist. Dieser ist ein einstückiges Spritzteil und ist an seinem zweiten Ende mit einem Kupplungskopf 18 versehen. An das Ende des Rohrkrümmers 66 ist ein Olivenstück 64 angesetzt, welches an einem Ende mit Rippen 66 zum Fixieren eines Schlauches versehen ist, und am in Figur 4 oben liegenden Ende mit einem Gegenkupplungskopf 22 versehen ist, der mit Kupplungskopf 18 des Rohrkrümmers 62 verbunden ist.

Anstelle des Olivenstückes 64 könnte man in weiterer Ausbildung der Erfindung auch andere Rohr-Systemteile anbauen, die jeweils am einen Ende einen Kupplungskopf 18 und am anderen Ende einen Gegenkupplungskopf 22 aufweisen. Man kann dann so auf diese Weise ein aus Systemteilen aufgebautes Rohr aus mehreren Segmenten mit einem glatten Standardrohr verbinden.

## Patentansprüche

1. Kupplungsteil (14) für ein fluidische Schnellkupplungssystem, welches am einen Ende einen Kupplungskopf (18) einer Schnellkupplung aufweist, **gekennzeichnet durch** einen Verbindungsabschnitt (16), welcher unter enger Passung über einen Endabschnitt eines Rohres (10, 12) schiebbar ist und **durch** Mittel (26) zum Fixieren des Verbindungsabschnittes (16) auf dem Rohrendabschnitt (10).

2. Kupplungsteil nach Anspruch 1, **dadurch gekennzeichnet, dass** die Fixiermittel (26) einen Fixierkragen, eine Fixierschraube oder eine Klebstoffschicht umfassen.

3. Kupplungsteil nach Anspruch 1 oder 2, **gekennzeichnet durch** ein Brückenteil (20), welches an beiden Enden mit Gegenkupplungsköpfen (22) versehen ist.

4. Kupplungsteil nach Anspruch 2, **dadurch gekennzeichnet, dass** das Brückenteil (20) einen nach innen gezogenen Abschnitt (24) aufweist, der die Stirnfläche des Rohrendabschnittes (10) übergreift.

5. Kupplungsteil nach Anspruch 3 oder 4, **dadurch gekennzeichnet, dass** der Gegenkupplungskopf (22) des Brückenteiles (20) eine radiale Schulter aufweist, die einer radialen Schulter des Kupplungskopfes (18) gegenüberliegt, und zwischen diesen beiden Schultern eine Dichtung (34) liegt, die zwischen den Schultern eingespannt ist.

6. Kupplungsteil nach einem der Ansprüche 1 bis 5, **dadurch gekennzeichnet, dass** der Kupplungskopf 18 eine Verriegelungsnut (38) aufweist, in welche ein an einem Gegenkupplungskopf (22) abgestütztes Verriegelungsteil (50) eingreift, welches vorzugsweise der Breite der Verriegelungsnut (38) entsprechende Dicke aufweist.

7. Kupplungsteil nach Anspruch 6, **dadurch gekennzeichnet, dass** das Verriegelungsteil (50) zwei verriegelungsarme (46) aufweist, die in die Verriegelungsnut (38) an diametral gegenüberliegenden Stellen eingreifen.

8. Kupplungsteil nach Anspruch 7, **dadurch gekennzeichnet, dass** die beiden Verriegelungsarme (46) jeweils von einem Biegeabschnitt (48) des Verriegelungsteiles (50) getragen sind.

9. Kupplungsteil nach Anspruch 8, **dadurch gekennzeichnet, dass** das Verriegelungsteil (50) einen nach außen weisenden Greifabschnitt (52) aufweist.

10. Kupplungsteil nach Anspruch 8 oder 9, **dadurch gekennzeichnet, dass** die Verriegelungsarme (46) in Durchgängen (42) des Gegenkupplungskopfes (22) geführt sind.

11. Kupplungsteil nach einem der Ansprüche 7 bis 10, **dadurch gekennzeichnet, dass** die radial innenliegenden Begrenzungsflächen (56) der Verriegelungsarme (46) eine der Krümmungsbodens der Verriegelungsnut (38) entsprechende Krümmung haben, 80 dass die Verriegelungsarme (46) auf den gekrümmten Boden der Positioniersnut (40) aufrastbar sind.
